# FASCICULE DE BREVET EUROPEEN

(11) **EP 0 925 258 B1**
(45) Date de publication et mention de la délivrance du brevet: **24.01.2001**
(21) Numéro de dépôt: 97940184.1
(22) Date de dépôt: 05.09.1997
(51) Int. Cl.: C02F 3/30, C02F 3/00, C02F 3/06, C02F 3/12

(54) **PROCEDE D'EPURATION DE LA POLLUTION CARBONEE ET DE DENITRIFICATION EN MILIEU OXYGENE DES EAUX USEES**
PROZESS ZUR ENTFERNUNG VON ORGANISCHEN KOMPONENTEN AUS ABWASSER UND ZUR DENITRIFIKATION MIT HILFE VON SAUERSTOFF
METHOD FOR PURIFYING CARBON-CONTAINING POLLUTION AND DENITRIFYING WASTE WATER IN OXYGENIC MEDIUM

(30) Priorité: 10.09.1996 FR 9611036
(43) Date de publication de la demande: 30.06.1999
(73) Titulaire: DEGREMONT, 92508 Rueil-Malmaison Cédex (FR)
(72) Inventeur: CHUDOBA, Pavel, F-78230 Le Pecq (FR); GRIMAUD, Claude, F-13730 Saint Victoret (FR); PUJOL, Roger, F-78400 Chatou (FR)
(74) Mandataire: Armengaud Ainé, Alain
(86) Numéro de dépôt international: FR9701568
(87) Numéro de publication internationale: WO9811027

(56) Documents cités:
- EP-A- 0 442 337
- WO-A-93/13023
- PATENT ABSTRACTS OF JAPAN vol. 005, no. 049 (C-049), 8 avril 1981 & JP 56 002892 A (KUBOTA LTD), 13 janvier 1981,
- PATENT ABSTRACTS OF JAPAN vol. 017, no. 551 (C-1117), 5 octobre 1993 & JP 05 154495 A (NGK INSULATORS LTD), 22 juin 1993,
- PATENT ABSTRACTS OF JAPAN vol. 017, no. 131 (C-1036), 18 mars 1993 & JP 04 305299 A (KUBOTA CORP), 28 octobre 1992,

## Description

La présente invention concerne un procédé et un dispositif perfectionnés d'élimination de la pollution carbonée et de l'azote contenus dans des effluents, notamment des eaux usées, par voie biologique et mettant en oeuvre le couplage d'une boue anoxique à très forte charge avec une nitrification à grande vitesse, en culture fixée sur un support fixe ou mobile.

Les procédés d'élimination des composés azotés des eaux usées par voie biologique comportent en règle générale deux étapes : la nitrification et la dénitrification. La nitrification est une réaction d'oxydation, par des bactéries autotrophes, de l'azote ammoniacal en azote nitreux ou nitrique. Les bactéries autotrophes, responsables de ce transfert, sont des bactéries croissant uniquement en présence d'oxygène. La deuxième étape, la dénitrification, consiste en une réduction en azote gazeux, par des bactéries hétérotrophes dénitrifiantes, des nitrites ou nitrates produits lors des réactions de nitrification. Les bactéries hétérotrophes dénitrifiantes, responsables de la transformation des nitrites ou nitrates en azote gazeux sont des bactéries aérobies facultatives, croissant soit en milieu aéré en présence d'oxygène, soit en milieu anoxique en absence d'oxygène libre, mais en présence de l'oxygène constitutif des nitrates et/ou nitrites.

Les procédés d'élimination des composés azotés des eaux usées doivent donc comporter deux zones différentes : une zone ou étape anoxique pour la dénitrification et une zone ou étape d'aération pour la nitrification.

Dans le domaine du traitement des eaux, deux formes de populations bactériennes peuvent être mises en oeuvre pour procéder à l'élimination de l'azote par voie biologique : des cultures libres ou des cultures fixées.

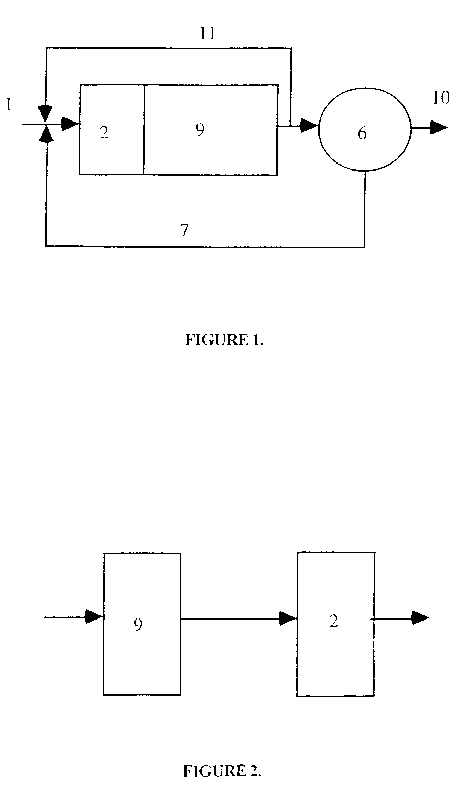

Sur la figure 1 des dessins annexés, on a représenté, de façon schématique, un système classique d'élimination de l'azote lors du traitement des eaux usées. Dans un tel système, la culture libre, par exemple une boue activée, est un mélange de différents micro-organismes en suspension, sous forme de flocs. Ainsi, les bactéries autotrophes nitrifiantes sont présentes dans le même floc que les bactéries hétérotrophes dénitrifiantes et de nombreux autres micro-organismes. L'ensemble de micro-organismes du floc parcourt la totalité du système, à savoir les zones anoxique 2 et aérée(s) 9, pour être séparé de l'eau traitée 10 par décantation dans le clarificateur 6 et recirculé 7 en tête du système . Le taux de recirculation de la liqueur nitrifiée 7 vers la zone anoxique 2 est souvent compris entre 100 et 600%, cette valeur dépendant soit de la concentration du carbonate organique disponible dans l'eau usée, soit du temps de séjour minimum admissible dans la zone anoxique 2. L'inconvénient majeur d'une telle configuration connue réside dans le fait que les bactéries autotrophes nitrifiantes sont obligées de traverser la zone anoxique, où en l'absence d'oxygène elles ne se reproduisent pas.

D'une façon similaire, les bactéries hétérotrophes dénitrifiantes doivent traverser la zone aérée, tout en utilisant l'oxygène dissous comme l'accepteur final d'électrons au lieu de l'azote nitrique ou nitreux. Ces passages répétés en milieu aéré ont généralement pour conséquence une désactivation temporaire des enzymes participant aux réactions de dénitrification, ce qui se traduit par un temps de latence au début de la période anoxique, correspondant à une réactivation de ces enzymes. Par conséquent, le système des réactions ainsi mis en jeu n'est pas optimal et réduit les cinétiques et l'efficacité des procédés d'élimination de l'azote par cultures libres.

De plus, l'étape limitante d'un procédé à boue activée nitrifiante/dénitrifiante classique est la nitrification, les bactéries autotrophes responsables de la transformation de l'azote ammoniacal en azote nitrique et/ou nitreux ayant des taux de croissance très faibles. L'âge de boue minimum pour permettre une nitrification satisfaisante doit donc être assez élevé, ce qui influence d'une façon négative les bactéries hétérotrophes dénitrifiantes, lesquelles sont au contraire les plus actives à des âges de boue très faibles et à des charges organiques très élevées. Ainsi, ces systèmes dits conventionnels sont connus de l'homme de l'art comme étant des procédés à faible charge appliquée.

D'autre part, il est bien connu de l'homme du métier que ces systèmes sont très sensibles aux à-coups de charge, à la fois des points de vue des surcharges hydrauliques risque (risque de perte de boues du décanteur) et biologiques (inhibition partielle de la nitrification due à un excès de pollution carbonée ou à un déficit d'aération).

Contrairement aux cultures libres, le mode de mise en oeuvre des cultures fixées. comme illustré par le schéma de la figure 2 des dessins annexés, permet de séparer les populations autotrophes nitrifiantes 9 et hétérotrophes dénitrifiantes 2. Ainsi, les bactéries immobilisées sur un support solide se trouvent en permanence en milieu plus favorable, sans passages périodiques dans des conditions dans lesquelles leur activité serait réduite. Ce type de mise en oeuvre a pour résultat d'accroître notablement les cinétiques des réactions biologiques.

La solution idéale consiste donc en la séparation des populations autotrophes et hétérotrophes. Jusqu'à présent, cette séparation n'a été mise en oeuvre que pour des cultures fixées (Water Science and Technology, vol. 19, 139-150 1987 ; EP-A 0 293 521). En ce qui concerne le domaine des cultures libres, la mise en oeuvre d'une boue activée évoluant en permanence en milieu anoxique, en absence d'oxygène dissous, permet de maintenir une biomasse dénitrifiante de très haute activité. Ce fait, déjà connu dans le domaine du traitement des eaux (Korrespondenz Abwasser, Vol. 41, n.11 p. 2077-2081, 1994) n'a pourtant jamais abouti à une application industrielle, principalement par défaut de contrôle des conditions du milieu anoxique et du taux de recirculation de l'azote nitrique.

EP-A-0 442 337 décrit un procédé biologique d'épuration comportant trois réacteurs dans lesquels la biomasse est identique. Dans cette publication antérieure, la boue activée est à faible charge et elle assure toutes les fonctions : nitrification, dénitrification et élimination du carbone. Il n'existe, dans cette publication antérieure, aucune séparation des biomasses hétérotrophe et autotrophe.

JP-56-00 2892 décrit un procédé de traitement biologique comportant un couplage bassin anoxique (dénitrification) au bassin aérobie (nitrification) sans aucune séparation des biomasses, la biomasse unique effectuant toutes les fonctions : nitrification, dénitrification et élimination du carbone. Il s'agit là encore d'une boue activée conventionnelle à faible charge.

La présente invention concerne une configuration originale de la mise en oeuvre et de la conduite d'une culture libre de bactéries hétérotrophes, évoluant en milieu anoxique, appelée dans ce qui suit la boue anoxique, et son couplage avec une culture de bactéries autotrophes fixées, les deux cultures étant parfaitement séparées l'une de l'autre, dans deux enceintes distinctes ; la culture fixée sert de source d'azote nitreux ou nitrique pour la boue anoxique.

En conséquence, cette invention est relative à un procédé biologique d'épuration d'eaux résiduaires en vue de la production d'un effluent à basse teneur en carbone et en composés oxygénés de l'azote comportant une étape de dénitrification, par traitement par boues activées, associée à une clarification, suivie d'une étape de nitrification et comportant une recirculation partielle de l'effluent nitré en amont de l'étape de traitement par boues activées, ce procédé étant caractérisé en ce que l'on réalise l'élimination du carbone, lors de l'étape de traitement par boues activées, dans un même réacteur biologique, cette élimination se faisant selon les caractéristiques débit-pollution de l'eau à traiter, en présence :
- d'oxygène constitutif des composés nitrés, l'étape d'élimination du carbone comportant une dénitrification simultanée,
- d'oxygène apporté par une aération contrôlée, continue ou discontinue et donc avec oxydation directe du carbone,
- simultanément d'oxygène constitutif des composés nitrés et d'oxygène apporté par l'oxydation contrôlée, continue ou discontinue, et donc avec dénitrification et oxydation simultanées du carbone, en ce que, la conduite du procédé est assurée par la mesure en continu du potentiel d'oxydo-réduction du milieu anoxique, cette mesure étant couplée :

- à une mesure de la concentration en nitrates de l'effluent intermédiaire,
- à un dispositif d'asservissement des moyens d'apport de l'air d'appoint sur la boue anoxique et,
- à un réglage du débit de recirculation de la liqueur nitrifiée, et, en ce que
- ladite mesure de la concentration en nitrates est couplée à la recirculation de la liqueur nitrifiée.

Dans l'état antérieur de l'art relatif à la technique, objet de l'invention, (Stuttgarter Berichte, Bd 103, p. 103, 1988 ; Water Science & Technology, vol. 26, n° 5/6, p. 1097-1104 1992 ; WO 93/13023 ; Korrespondenz Abwasser , vol. 41 , n. 11, p. 2077-2081, 1994) on met en oeuvre une boue activée, utilisant partiellement ou totalement de l'azote nitrique ou nitreux comme accepteur d'électrons, ces composés azotés provenant, par l'intermédiaire d'une boucle de recirculation, d'un réacteur à lit bactérien nitrifiant situé en aval de la culture libre.

Ainsi qu'on le comprend, le procédé objet de la présente invention se distingue nettement de cet état antérieur de la technique :
- par des conditions particulières de mise en oeuvre de la culture libre, permettant de la faire évoluer de manière permanente en milieu anoxique et à très forte charge appliquée,
- par la mesure simultanée du potentiel d'oxydo-réduction et des concentrations en nitrates ou en azote ammoniacal, permettant le contrôle en continu du système et la conduite du procédé,
- par le couplage de deux systèmes différents (culture libre de boue anoxique et culture fixée nitrifiante) fonctionnant à très forte charge appliquée.

Les cultures libres à forte ou très forte charge appliquée présentent, par rapport aux systèmes à faible charge, un intérêt majeur pour l'homme du métier. Un tel système maintient la population microbienne hétérotrophes en forte activité, ce qui se traduit par des cinétiques de nitrification très rapides, permettant la conception d'ouvrages compacts. En revanche, les cultures libres à forte charge interdisent la nitrification.

L'état antérieur de l'art relatif à la technique objet de l'invention ne permet pas à l'homme du métier de maîtriser la mise en oeuvre et la conduite d'un procédé à très forte charge.

Dans le cas des références ci-dessus : Stuttgarter Berichte, Bd. 103, p. 103-110, 1988 et Water Science and Technology, vol. 26 n. 5/6, p. 1097-1104, 1990, il s'agit de systèmes à boue anoxique ou anoxique/aérobie à faible charge appliquée, suivie d'une nitrification en lit bactérien également à faible charge. WO-93/13023 décrit un système mettant en oeuvre une boue anaérobie/anoxique couplée à une nitrification par culture fixée. Cette publication ne comporte aucune indication permettant une mise en oeuvre ou la maîtrise de ce procédé et l'expérience démontre que l'homme du métier ne peut pas maîtriser le fonctionnement du système ainsi décrit. Ainsi, dans cette dernière publication, il n'est pas prévu de dispositif de régulation ou de conduite, ni de moyen d'aération de secours de la partie anaérobie/anoxique, indispensables lors du démarrage ou pour traiter des concentrations très élevées. Finalement, le document Korrespondenz Abwasser, vol. 41, n. 11, p. 2077 - 2081, 1984 décrit un procédé à boue activée évoluant en milieu anoxique, couplé à un lit bactérien nitrifiant à faible charge. La partie anoxique fonctionne à des charges appliquées de l'ordre de 0,44 à 3 kg DCO/kg MV.j, (Unités : kg Demande chimique en oxygène/kg de Matière volatile et par jour) mais aucune régulation ou conduite du milieu anoxique n'est suggérée dans cette publication antérieure. Dans ces conditions, il n'est pas possible de fiabiliser le traitement, notamment lors des périodes de variation de charges hydrauliques ou dans les conditions de fonctionnement à forte ou très forte charge anoxique.

La mesure du potentiel d'oxydo-réduction caractérise de manière globale l'état d'oxydo-réduction du milieu, tout en intégrant les conditions de fonctionnement de l'installation. L'intérêt pratique d'utilisation de ce paramètre pour la régulation des procédés d'élimination de l'azote par boues activées a été souligné à plusieurs reprises (Water Supply, vol. 6, p. 275-285, 1988 ; T.S.M. - L'eau , n. 7 - 8, p. 393 - 398, 1989 ; Water Science and Technology, vol. 21, p. 1209 - 1223, 1989 ; T.S.M. L'eau n. 4, p. 187 - 194, 1992, FR-A-2 685 692).

L'état de l'art décrit dans les publications mentionnées ci-dessus fait apparaître essentiellement l'asservissement des moyens d'aération à la mesure du potentiel d'oxydo-réduction pour assurer la conduite des procédés à boues activées à bassin unique dans lesquelles les périodes aérées suivent les périodes sans aération. Ce type de régulation est basé sur la variation de la valeur du potentiel d'oxydo-réduction entre deux seuils : un seuil bas (SB) et un seuil haut (SH). La valeur de SB, généralement fixée à 50 mV/EHN, indique l'épuisement de nitrates et/ou nitrites et le début de l'anaérobiose. La valeur de SH, généralement entre 350 et 450 mv/EHN, indique la progression de l'état d'oxydation du milieu et la dégradation imminente de la fonction nitrification. Dans les valeurs mentionnées ci-dessus EHN signifie Electrode Hydrogène Normal.

Selon l'état antérieur de l'art concernant la technique objet de l'invention, les moyens d'aération sont asservis à la mesure du potentiel d'oxydo-réduction de la manière suivante :
- lorsque l'étape de dénitrification est terminée, les nitrates et/ou nitrites sont transformés en azote gazeux, la valeur de SB est atteinte et le dispositif d'aération se met en route ;
- lorsque l'étape de nitrification est terminée, l'azote ammoniacal est oxydé en azote nitrique et/ou nitreux, la valeur de SH est atteinte et le dispositif d'aération est arrêté.

Dans certains cas décrits dans la littérature, la mise en marche ou l'arrêt du dispositif d'aération, après obtention des valeurs de SH ou SB, est précédée d'une courte temporisation. Dans d'autres cas, (FR-A-2 685 692) une mesure complémentaire de la teneur en azote de l'effluent a pour seul objet d'ajuster les valeurs des seuils SH et SB.

Ce type de régulation connu n'a cependant été mis en oeuvre que dans des systèmes conventionnels à boues activées, comportant un bassin unique d'aération, de grand volume, pour assurer l'élimination de l'azote (nitrification / dénitrification).

En résumé, l'état antérieur de l'art concernant la technique objet de l'invention met en évidence une régulation du procédé à boues activées par l'asservissement des moyens d'aération à la mesure du potentiel d'oxydo-réduction, par l'intermédiaire des valeurs de SB et SH. C'est le seul paramètre asservi à la mesure du potentiel d'oxydo-réduction.

Selon le procédé objet de la présente invention, la conduite optimisée est assurée, comme on le verra ci-après, par la mesure du potentiel d'oxydo-réduction du milieu anoxique, couplée à une mesure de la concentration en nitrates de l'effluent intermédiaire. Cette mesure influence par la suite deux paramètres de fonctionnement : le débit de recirculation de la liqueur nitrifiée et l'apport épisodique d'air d'appoint. Dans d'autres cas, (FR-A-2 685 692), une mesure complémentaire de la teneur en azote de l'effluent a pour seul objet d'ajuster les valeurs des seuils SH et SB.

La cinétique de la réaction de dénitrification, ainsi que son rendement dépendent du rapport de la pollution carbonée apportée par l'eau usée et de la concentration de nitrates et/ou nitrites recirculés, ce rapport étant exprimé en DCO/N-NOx appliqué au réacteur anoxique.

Lorsque le rapport DCO/N-NOx est trop faible, en général inférieur à 15, l'apport du carbone organique par l'eau usée est trop faible et le débit de recirculation de la liqueur nitrifiée doit alors être réduit. Cette réduction est asservie à la mesure du potentiel d'oxydo-réduction, car cette situation est détectée par une valeur élevée de ce dernier, entre 100 et 150 mV/EHN. Par contre, lorsque le rapport DCO/N-NOx est trop fort, en général supérieur à 25, le débit de recirculation de la liqueur nitrifiée doit être augmenté car le mélange entrant dans le réacteur anoxique contient un excès de pollution carbonée. Cette situation est indiquée par une valeur du potentiel d'oxydo-réduction donnée, se situant dans un intervalle de 60 à 110 mV/EHN. Lorsque le débit de recirculation est déjà ajusté à son maximum, l'excès du carbone facilement assimilable doit être éliminé par l'apport d'une quantité suffisante d'air. Dans ce cas, la valeur du potentiel d'oxydo-réduction continue à baisser jusqu'à une valeur donnée qui se situe dans un domaine de 30 à 60 mV/EHN. C'est à ce moment que des apports limités en air, asservis à la mesure du potentiel d'oxydo-réduction, sont fournis pour un pas de temps donné, et donc maîtrisé.

Le débit de recirculation peut être avantageusement ajusté à l'aide d'une mesure de concentration de nitrates en aval du réacteur anoxique. Cette mesure caractérise le niveau du traitement et indique, à travers une valeur seuil et une alarme, que le débit-limite de recirculation, permettant une dénitrification quasi-complète, a été atteint. Ce paramètre de sécurité peut corriger les éventuelles défaillances ou anomalies du système de conduite par l'asservissement de la recirculation à la mesure du potentiel d'oxydo-réduction.

Selon une caractéristique de cette invention, le temps de séjour hydraulique total de l'effluent brut lors de l'étape de traitement par boues activées (dénitrification) et de l'effluent intermédiaire lors de l'étape de nitrification, sans compter la recirculation est compris entre 1,5 et 5 heures, de préférence entre 2 et 3 heures.

Selon l'invention, la concentration de la boue anoxique lors de l'étape de dénitrification est compris entre 1 et 4 g/l., de préférence entre 1 et 2g/l.

Selon un mode de mise en oeuvre du procédé objet de l'invention, le taux de recirculation de la liqueur nitrifiée vers l'étape de dénitrification est compris entre 50 et 400%.

Selon un mode de réalisation préféré de l'invention, la séparation de la boue activée et de l'effluent intermédiaire est réalisée de préférence par décantation lamellaire dans un ouvrage séparé, placé en aval du réacteur dans lequel s'effectue l'étape de dénitrification.

Selon un autre aspect, cette invention vise également un dispositif pour la mise en oeuvre du procédé tel que spécifié ci-dessus, ce dispositif étant caractérisé en ce qu'il comprend :
- un réacteur à culture libre évoluant en milieu anoxique en présence d'azote nitrique ou nitreux, ce réacteur comportant des moyens d'agitation mécanique fonctionnant d'une façon continue, des moyens d'apport de l'air d'appoint asservis à la mesure du potentiel d'oxydo-réduction et une sonde de mesure du potentiel d'oxydo-réduction du milieu anoxique ;
- un clarificateur, séparé du réacteur, effectuant la séparation de la boue anoxique de l'effluent dénitrifié ;
- un circuit de recyclage de la boue anoxique séparée vers ledit réacteur à culture libre;
- un moyen de mesure en continu de la concentration de nitrates dans l'effluent intermédiaire, couplé au recyclage de la liqueur nitrifiée, de manière à diminuer automatiquement le taux dudit recyclage lorsqu'est atteint le seuil S₃ de concentration en nitrates, afin de corriger les éventuelles defaillances ou anomalies du système de régulation de la recirculation par la mesure du potentiel d'oxydo-réduction, conduisant vers une dénitrification incomplète, ledit moyen de mesure étant également couplé à la sonde de mesure du potentiel d'oxydo-réduction du milieu anoxique;
- un réacteur de nitrification à biomasse fixée à support fixe (filtre biologique) ou mobile (lit fluidisé ou lit mobile) recevant l'effluent intermédiaire provenant du clarificateur avec, en option, une mesure en continu de la concentration en azote ammoniacal à la sortie de ce réacteur et,
- un circuit de recirculation d'une partie de l'effluent final dans le réacteur à culture libre contenant la boue anoxique, le débit de recirculation étant asservi à la mesure du potentiel d'oxydo-réduction de la boue anoxique dans le réacteur anoxique.

Selon un mode de réalisation du dispositif selon l'invention, le réacteur de nitrification de l'effluent intermédiaire est un biofiltre nitrifiant à courant ascendant, fonctionnant avec un temps de séjour hydraulique extrêmement court (quelques minutes, notamment de l'ordre de 1 à 10 minutes) et avec des vitesses de passage élevées, se situant entre 8 et 30 m/h.

Selon encore un autre exemple de réalisation de ce dispositif, le réacteur de nitrification de l'effluent intermédiaire est un réacteur à culture fixée, du type lit mobile ou lit fluidisé, mettant en oeuvre un matériau support mobile.

Comme on le comprend, le procédé et le dispositif proposés par la présente invention se caractérisent par la suppression de toute décantation préalable, faisant ainsi participer la pollution particulaire organique aux réactions de dénitrification, le fonctionnement étant par ailleurs caractérisé d'une façon très avantageuse par des charges organiques appliquées très élevées, à savoir supérieures à 3 kg DCO/kg MV.j, (à comparer à 0.1- 0.2 kg DCO/kg MV.j pour les systèmes classiques, et à 0.4 - 3 kg DCO/kg MV.j cités dans les références mentionnées ci-dessus. Ces conditions opératoires permettent de maintenir une boue anoxique très active, avec des cinétiques de dénitrification très élevées et une excellente décantabilité des boues (IB : Indice de Boue sensiblement égal à 50 ml/g).

Ainsi, l'élimination quasi-totale des pollutions carbonée et azotée est possible dans un temps très court, le temps de séjour hydraulique global de l'eau brute selon le procédé objet de l'invention étant de 1.5 à 5 heures et de préférence de 2 à 3 heures.

De plus, ces conditions, qui conduisent à la sélection de populations spécifiques permettent de fonctionner avec des indices de boue très faibles, ce qui facilite la séparation de la boue anoxique dans un clarificateur.

Ainsi qu'on l'a déjà spécifié ci-dessus, le principe de la conduite optimisée du procédé objet de la présente invention est basé sur l'asservissement de deux paramètres distincts : le débit de recirculation de la liqueur nitrifiée vers la boue anoxique et la mise en route des moyens d'apport de l'air d'appoint à l'étape dénitrifiante. Ces deux paramètres sont asservis à la mesure en continu du potentiel d'oxydo-réduction du milieu anoxique, couplée à la mesure en continu de la concentration en nitrate de l'effluent intermédiaire et, en option, à la mesure de la concentration de l'azote ammoniacal de la liqueur nitrifiée. Le potentiel d'oxydo-réduction caractérise l'état d'oxydation du milieu et indirectement le rapport DCO/N-NOx appliqué au réacteur anoxique. L'intérêt d'une conduite optimisée réalisée conformément au procédé objet de l'invention est donc de maintenir un rapport DCO/N-NOx sensiblement constant, tout en maintenant le potentiel d'oxydo-réduction du milieu entre 50 et 150 mV/EHN, de préférence entre 80 et 110 mV/EHN. Dans ce rapport, le paramètre DCO, qui représente la pollution carbonée apportée par l'eau brute, varie au cours de la journée et ne peut pas être maîtrisé par l'exploitant d'une station d'épuration. Par contre, le paramètre N-NOx représentant le flux de nitrates apporté par la recirculation de la liqueur nitrifiée constitue un paramètre dont la valeur est ajustable par l'exploitant.

Le mode de conduite mis en oeuvre par le procédé objet de l'invention assure non seulement la stabilité du milieu anoxique, et par conséquent des conditions biologiques, mais il permet également d'obtenir un débit total (eau usée + recirculation) très peu variable à travers le système. Lorsque le débit de l'eau brute augmente brusquement par exemple suite à un événement pluvieux, la dilution de la source du carbone organique provoque une baisse du rapport DCO/N-NOx appliqué, laquelle se traduit par une augmentation du potentiel d'oxydo-réduction. Cette variation provoque par la suite une diminution du débit de recirculation, le débit total restant relativement stable grâce au système de conduite optimisée selon l'invention. Ce fonctionnement, tout à fait caractéristique du procédé objet de l'invention, permet ainsi de résister aux à-coups de pollution et de prendre en compte les surcharges hydrauliques.

D'autres caractéristiques et avantages de la présente invention ressortiront de la description faite ci-après en référence aux figures 3 , 4 et 5 des dessins annexés, sur lesquelles :
La figure 3 est une représentation schématique du principe de la conduite optimisée du procédé objet de la présente invention ;
La figure 4 est une représentation schématique d'un dispositif mettant en oeuvre un premier exemple de réalisation de l'invention et,
La figure 5 est une vue schématique similaire à la figure 4 d'une variante de réalisation.

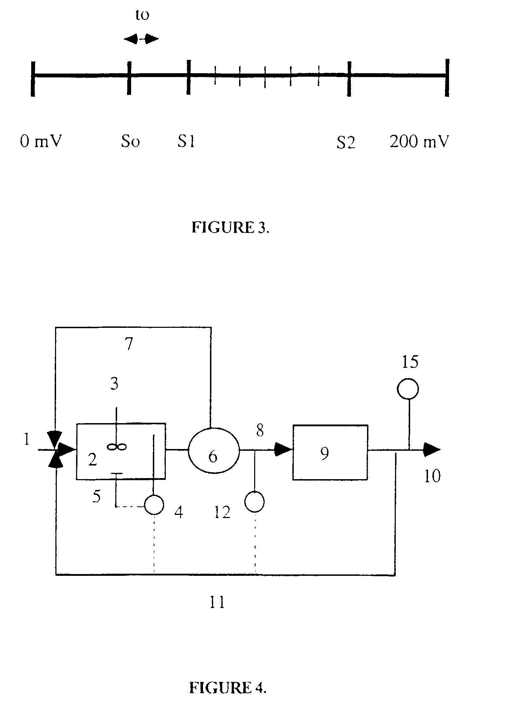

On se réfère en premier lieu à la figure 3 qui représente le principe de la conduite optimisée du procédé selon l'invention.

Lors des pointes journalières, la concentration en DCO de l'eau usée augmente, de même que le rapport DCO / N-NOx appliqué au réacteur anoxique. Cette évolution se traduit par une baisse du potentiel d'oxydo-réduction, cette baisse étant le facteur déterminant l'augmentation de la recirculation de liqueur nitrifiée : pour maintenir le rapport DCO / N-NOx à une valeur optimale, en général entre 15 et 40, et de préférence entre 20 et 30, il faut donc augmenter le flux de nitrates et donc le taux de recirculation de la liqueur nitrifiée. De manière identique, une diminution de la concentration en DCO de l'eau usée s'accompagne d'une augmentation de la valeur du potentiel d'oxydo-réduction. Cette augmentation est l'indice d'un excès de nitrates, par rapport à la pollution carbonée disponible. La valeur croissante du potentiel d'oxydo-réduction provoque alors une diminution du taux de recirculation et par conséquent de l'apport de nitrates dans le réacteur anoxique.

Lorsque l'excès de carbone organique par rapport au flux de nitrates est assez important pour que le taux de recirculation soit ajusté à son maximum et que, malgré cela, le potentiel d'oxydo-réduction continue à diminuer au-dessous d'une valeur-seuil So, les moyens d'apport de l'air d'appoint sont alors mis en action pour un pas de temps donné avec une temporisation to, la valeur de to se situant de préférence entre 1 et 10 minutes. On apporte l'air en continu tant que l'on n'a pas atteint la valeur to. Ainsi, l'excès du carbone organique qui n'est pas utilisé lors de la réaction de dénitrification est simultanément oxydé, sans pour autant perturber la dénitrification. La valeur de ce seuil du potentiel d'oxydo-réduction se situe alors dans une fourchette de 30 à 70 mV/EHN, de préférence de 40 à 60 mV/EHN.

Selon la figure 3 des dessins annexés, l'apport de l'air d'appoint est asservi à la valeur de seuil So et le débit de recirculation est asservi à une valeur du potentiel d'oxydo-réduction se situant entre deux seuils Si et S₂. La valeur du seuil Si est choisie entre 50 et 80 mV/EHN, de préférence entre 60 et 70 mV/EHN et la valeur du seuil S₂ est choisie entre 100 et 150 mV/EHN, de préférence entre 110 et 120 mV/EHN. La valeur du seuil S₂ correspond à un état d'oxydo-réduction du milieu caractérisé par un excès relatif de l'apport de nitrates par rapport à la teneur en carbone organique disponible. En principe, cette valeur ne peut jamais être dépassée, mais en cas de défaillance ou d'anomalie, on prévoit une alarme qui se déclenche afin d'alerter immédiatement l'exploitant.

On se réfère maintenant à la figure 4 sur laquelle un premier mode de mise en oeuvre du procédé, objet de l'invention, a été schématisé .

Dans cet exemple non limitatif de réalisation, l'eau brute ou mécaniquement prétraitée 1 dans un ouvrage de dessablage et dégraissage, est envoyée directement et sans décantation préalable dans le réacteur 2 pour être mélangée avec une culture microbienne libre, la boue anoxique. Le réacteur 2 est agité mécaniquement 3, avec la possibilité d'un apport très limité d'air d'appoint, asservi à la mesure du potentiel d'oxydo-réduction. La réaction entre le carbone organique présent dans l'eau brute ou prétraitée 1 et l'azote nitrique ou nitreux recirculé 11 dans le réacteur 2 a pour résultat la transformation complète de l'azote nitrique ou nitreux en azote gazeux. La croissance des bactéries hétérotrophes dénitrifiantes est donc assurée grâce à l'énergie fournie par cette réaction. En l'absence d'oxygène libre, l'azote nitrique ou nitreux représente le seul accepteur d'électrons dont disposent les bactéries hétérotrophes. En présence d'une concentration très faible d'oxygène dissous, généralement inférieure à 0,2 mg/l, une oxydation du carbone organique est observée, simultanément à la dénitrification anoxique. La proportion des bactéries hétérotrophes capables d'effectuer la réaction de dénitrification dans la boue anoxique est plus importante que celle d'une boue activée classique. Ceci a pour résultat des cinétiques de dénitrification plusieurs fois plus élevées que celles observées dans des systèmes conventionnels à culture libre, ainsi que des volumes d'ouvrages sensiblement réduits.

L'absence d'un décanteur primaire conduit à une augmentation de la charge organique, la pollution particulaire participant aux réactions de dénitrification. La mise en oeuvre de la boue anoxique est caractérisée par des conditions de très forte charge appliquée, à savoir supérieure à 3 kg DCO /kg MV.j, et de préférence supérieure ou égale à 4 kg DCO /kg MV.j et par un excellent indice de boue (IB sensiblement égal à 50ml/g).

Afin de maintenir en permanence des conditions anoxiques et de mettre en oeuvre une conduite optimisée du procédé objet de l'invention, le réacteur 2 est équipé d'une sonde 4 mesurant le potentiel d'oxydo-réduction de la liqueur mixte, couplée à la mesure en continu de la concentration en azote nitrique 12. Ce système permet au procédé de fonctionner en conditions optimales, à savoir à un rapport DCO/N-NOx constant et avec une valeur du potentiel d'oxydo-réduction assurant une dénitrification complète de la liqueur nitrifiée. L'asservissement de l'air d'appoint à une valeur du potentiel d'oxydo-réduction (S₀ ) permet en plus, dans certaines conditions extrêmes, d'éliminer l'excès du carbone par oxydation, tout en maintenant la dénitrification simultanée.

Comme on le comprend, l'association d'un procédé à boue anoxique à très forte charge à un système de conduite optimisée, basé sur l'asservissement des moyens de recirculation de la liqueur nitrifiée et d'apport de l'air d'appoint à la mesure du potentiel d'oxydo-réduction du milieu anoxique, permet non seulement d'obtenir un niveau élevé du traitement dans un réacteur compact, mais surtout de maîtriser le procédé et ses performances dans le temps et ceci même lors des périodes de surcharge hydraulique (temps de pluie).

Le résultat du traitement par la boue anoxique est aussi contrôlé par une mesure en continu 12 de nitrates dans l'effluent intermédiaire, l'objectif de la dénitrification par boue anoxique étant d'obtenir un effluent intermédiaire contenant le minimum de nitrates résiduaires. Lorsqu'un seuil S₃ préalablement fixé, de préférence entre 0,3 et 2 mg N-NOx/l, et mieux, entre 0,5 et 1,5 mg N-NOx/l est atteint, le signal est donné pour diminuer la recirculation de la liqueur nitrifiée, indépendamment de la valeur réelle du potentiel d'oxydo-réduction. Une alarme peut également être déclenchée, si après un temps donné, la valeur du potentiel d'oxydo-réduction ne diminue pas suffisamment. En fait, le dépassement du seuil S₃ signifie que la réaction de dénitrification a été effectuée de manière incomplète et avec un rendement diminué, ce qui a pour cause probablement un rapport DCO/N-NOx trop faible. Dans ce cas, il est inutile de recirculer davantage de nitrates qui ne peuvent pas être dénitrifiés par la boue anoxique. La mesure de nitrates constitue ainsi une sécurité du système d'asservissement à la mesure du potentiel d'oxydo-réduction, et son rôle est avant tout de corriger les défaillances éventuelles du système de régulation.

Après avoir accompli la réaction de dénitrification, la boue anoxique est séparée de l'effluent dénitrifié dans un clarificateur intermédiaire 6. Ce clarificateur peut être, très avantageusement, un séparateur lamellaire. La boue anoxique séparée et concentrée est ensuite recirculée 7 dans le réacteur anoxique 2 . L'effluent intermédiaire 8, riche en azote ammoniacal qui n'a pas été éliminé par la boue anoxique, est envoyé vers le réacteur de nitrification à biomasse fixée 9 caractérisé par un temps de séjour hydraulique très court, et par une forte charge appliquée. En traversant ce réacteur, l'azote ammoniacal est oxydé en azote nitreux ou nitrique par des bactéries autotrophes fixées. Une partie de l'effluent 10 est par la suite recirculée 11 vers le réacteur anoxique 2 pour y être dénitrifiée par la boue anoxique. Comme exemple, d'un système de nitrification par biomasse fixée, on peut citer le biofiltre aéré à flux ascendant du type « Biofor » commercialisé par la présente titulaire.

De préférence selon l'invention, la concentration de la boue anoxique dans le réacteur 2 est comprise entre 1 et 4 g/l et de préférence entre 1 et 2g/l. Le temps de séjour hydraulique de l'effluent brut 1 sans compter la recirculation, dans le réacteur anoxique 2 se situe entre 0.5 et 3 heures, de préférence entre 1 et 2 heures.

Selon l'invention, le temps de séjour hydraulique global de l'effluent dans le réacteur anoxique 2 et de l'effluent intermédiaire dans le réacteur 9, sans compter la recirculation, est compris entre 1,5 et 5 heures, de préférence entre 2 et 3 heures.

Selon un mode de mise en oeuvre du procédé objet de l'invention, la concentration en azote ammoniacal de l'effluent final est contrôlée en permanence par un dispositif de mesure 15 placé à la sortie du réacteur 9, afin de maintenir cette concentration à une valeur résiduelle inférieure à 2mg N-NH₄ /l, de préférence égale ou inférieure à 1 mg N-NH₄/l.

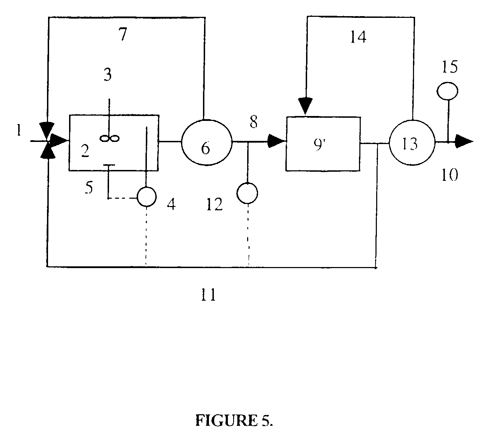

Selon l'invention, l'étape de la nitrification peut également être accomplie par une culture de micro-organismes autotrophes fixée sur ou dans un matériau mobile. La figure 5 montre une telle configuration. Contrairement à la configuration précédente, un réacteur à culture fixée sur un matériau mobile 9' est suivi d'un clarificateur final 13 qui a pour but de retenir la fraction de culture libre échappée du réacteur 9'. Comme exemple d'un système de nitrification de ce type, on peut mentionner un réacteur à lit mobile, par exemple du type décrit dans Fr-A-2706883, ou fluidisé. Dans les deux cas la fraction de la biomasse restée libre dans le réacteur n'est qu'une fraction faible par rapport à la biomasse fixée (<5 à 30%), aussi la quantité de biomasse autotrophe aérée recyclée 11 est très faible par rapport à celle du système classique de boues activées (cf Figure 1). Ceci ne réduit donc pas les avantages décrits ci-dessus pour le système anoxique.

Il est bien évident que la mise en oeuvre du procédé, objet de l'invention, ne se limite pas uniquement aux configurations décrites ci-dessus à titre d'exemple. La boue anoxique peut présenter toutes les configurations connues de l'homme de l'art, à condition de respecter les conditions de mise en oeuvre décrites ci-dessus (très forte charge hydraulique, temps de séjour hydraulique court, conduite optimisée, rapport DCO/N-NOx appliqué stable ou optimum, ...).

La mise en oeuvre du procédé, objet de l'invention, permet de séparer la biomasse dénitrifiante de la biomasse nitrifiante, c'est-à-dire d'optimiser l'activité des bactéries hétérotrophes dénitrifiantes de la boue anoxique. Le fait qu'elles évoluent constamment en milieu anoxique, et surtout à un rapport DCO/N-NOx stable ou optimum, leur permet d'avoir en permanence des enzymes actives, même en présence d'une quantité limitée d'oxygène dissous, ce qui a pour résultat une cinétique de dénitrification très élevée. Les cinétiques de dénitrification élevées permettent de traiter des charges plus importantes, dans un laps de temps réduit. Pour maintenir le potentiel de dénitrification de la culture le plus élevé possible, le système doit travailler à très forte charge organique, de préférence égale ou supérieure à 3 kg DCO/kg, MV.j, à un âge de boue très faible, de l'ordre de 2 à 4 jours et à un rapport DCO/N-NOx optimal. La mise en oeuvre de la boue anoxique et sa conduite optimisée permettent donc de réduire sensiblement le volume de l'ouvrage, comparé aux systèmes conventionnels d'élimination de l'azote par boue activée, le gain pouvant atteindre jusqu'à 60% du volume du bassin anoxique conventionnel.

La charge appliquée très élevée et le milieu anoxique favorisent d'une part la sélection des espèces hétérotrophes capables de dénitrifier, la boue anoxique étant par conséquent plus riche en ces espèces qu'une boue activée classique, et d'autre part induisent une meilleure décantabilité de la boue, car le milieu de très forte charge anoxique est défavorable aux bactéries filamenteuses. La boue anoxique possédant d'excellentes capacités de décantation peut donc être séparée de l'effluent intermédiaire 8 par un séparateur lamellaire judicieusement placé en aval du réacteur anoxique.

La permanence des conditions anoxiques est contrôlée par un dispositif basé sur la mesure du potentiel d'oxydo-réduction du milieu. La mesure du potentiel d'oxydo-réduction permet à la fois d'ajuster le taux de recirculation de nitrates et/ou nitrites, et par conséquent d'empêcher le milieu de devenir anaérobie, de maintenir la population hétérotrophe en activité maximale et de maintenir également les cinétiques de dénitrification à un niveau très élevé car le rapport DCO/N-NOx appliqué au réacteur anoxique reste sensiblement constant à une valeur optimale. Un écart éventuel de ce système de conduite peut être corrigé par une mesure du taux de nitrates en aval du réacteur anoxique, cette mesure étant couplée à la recirculation de la liqueur nitrifiée. Lorsque le seuil préalablement fixé S₃ indiquant une dénitrification incomplète, est atteint, le taux de recirculation de la liqueur nitrifiée est automatiquement diminué.

Le fait que le débit de recirculation est asservi à la mesure de l'état d'oxydo-réduction du milieu et par conséquent, indirectement, aux variations quantitatives et qualitatives du flux de l'eau usée, a pour résultat une variation très faible du débit total traversant les ouvrages anoxique et nitrifiant, ce qui est une caractéristique de la filière. Ainsi, le procédé objet de la présente invention est capable de faire face aux à-coups de charge de façon fiable, contrairement aux systèmes à boues activées connus dans l'art antérieur à cette technique et cités dans le préambule de la présente description.

Les avantages du procédé, objet de l'invention, par rapport à une boue activée sont résumés dans le tableau suivant :

| Paramètre | Zone anoxique conventionnelle | boue anoxique selon l'invention |
|---|---|---|
| Temps de séjour de l'eau brute (heures) | 3 | 1 |
| Concentration de la boue (kg MS/m³) | 3-5 | 1.5-2 |
| Charge appliquée (kg DCO/kg MV.j) | 0.2 | >3 |
| Charge éliminée (kg N-NO₃/m³.j) | 0.2 | 0.5-0.6 |
| Cinétique de dénitrification (mg N-NO₃/g MV.h) | 3-4 | 10-15 |
| Indice de boue IB (ml/g) | 100-200 | 50-70 |

On retient de ce tableau notamment le gain économique très important en volume de l'ouvrage garni d'un facteur 3 , grâce à la fois aux cinétiques élevées de dénitrification, et par conséquent au temps de séjour de l'eau dans le système très faible, et également une vitesse ascensionnelle de l'eau dans le clarificateur plus élevée, grâce à l'indice de boue et à la concentration de boue faibles.

## Revendications

1. Procédé biologique d'épuration d'eaux résiduaires en vue de la production d'un effluent à basse teneur en carbone et en composés oxygénés de l'azote comportant une étape de dénitrification, par traitement par boues activées, associée à une clarification, suivie d'une étape de nitrification et comportant une recirculation partielle de l'effluent nitré en amont de l'étape de traitement par boues activées, ce procédé étant caractérisé en ce que l'on réalise l'élimination du carbone, lors de l'étape de traitement par boues activées, dans un même réacteur biologique, cette élimination se faisant selon les caractéristiques débit-pollution de l'eau à traiter, en présence :
- d'oxygène constitutif des composés nitrés, l'étape d'élimination du carbone comportant une dénitrification simultanée,
- d'oxygène apporté par une aération contrôlée, continue ou discontinue et donc avec oxydation directe du carbone,
- simultanément d'oxygène constitutif des composés nitrés et d'oxygène apporté par l'oxydation contrôlée, continue ou discontinue, et donc avec dénitrification et oxydation simultanées du carbone, en ce que
la conduite du procédé est assurée par la mesure en continu du potentiel d'oxydo-réduction du milieu anoxique, cette mesure étant couplée :
- à une mesure de la concentration en nitrates de l'effluent intermédiaire,
- à un dispositif d'asservissement des moyens d'apport de l'air d'appoint sur la boue anoxique et,
- à un réglage du débit de recirculation de la liqueur nitrifié, et en ce que
- ladite mesure de la concentration en nitrates est couplée à la recirculation de la liqueur nitrifiée.

2. Procédé selon la revendication 1 caractérisé en ce que l'étape de nitrification est effectuée sur une culture immobilisée sur un support fixe ou mobile.

3. Procédé selon l'une des revendications 1 ou 2 caractérisé en ce que le temps de séjour hydraulique total de l'effluent brut lors de l'étape de traitement par boues activées et de l'effluent intermédiaire lors de l'étape de nitrification, sans compter la recirculation est compris entre 1,5 et 5 heures, de préférence entre 2 et 3 heures.

4. Procédé selon l'une quelconque des revendications 1 à 3 caractérisé en ce que la charge organique appliquée à l'étape de traitement par boues activées est égale ou supérieure à 3 kg DCO / kg MV. jour, de préférence égale ou supérieure à 4 kg DCO / kg MV. jour.

5. Procédé selon l'une quelconque des revendications précédentes caractérisé en ce que le débit total de l'effluent traversant le système est sensiblement constant.

6. Procédé selon l'une quelconque des revendications précédentes caractérisé en ce que les eaux résiduaires d'origine urbaine ne subissent pas de décantation préalable à leur traitement dans l'étape de traitement par boues activées.

7. Procédé selon l'une quelconque des revendications 1 à 5 en ce que les eaux résiduaires d'origine industrielle subissent un pré-traitement approprié, en amont de leur traitement dans l'étape de boues activées.

8. Procédé selon l'une quelconque des revendications précédentes caractérisé en ce que le débit de recirculation de l'effluent nitrifié vers l'étape de traitement par boues activées est asservi à la mesure en continu du potentiel d'oxydo-réduction dans ladite étape, pour des valeurs de ce potentiel comprise entre des seuils S₁ et S₂.

9. Procédé selon l'une quelconque des revendications précédentes caractérisé en ce que le débit de recirculation ayant atteint sa valeur maximale, on provoque un apport d'oxygène dans l'étape de traitement par boues activées, effectué notamment par aération continue ou discontinue, chaque fois qu'un seuil S₀ du potentiel d'oxydo-réduction est atteint.

10. Procédé selon l'une quelconque des revendications précédentes caractérisé en ce que le débit de recirculation et l'oxygénation continue ou discontinue lors de l'étape de traitement par boues activées sont asservis à la mesure simultanée et en continu du potentiel d'oxydo-réduction dans cette étape et de la concentration en nitrates de l'effluent de cette même étape, la concentration en nitrates étant maintenue en dessous d'un seuil S₃.

11. Procédé selon l'une quelconque des revendications précédentes caractérisé en ce que le taux de recirculation de la liqueur nitrifiée vers l'étape de dénitrification et d'élimination du carbone et compris entre 50 et 400%.

12. Procédé selon l'une quelconque des revendications précédentes caractérisé en ce que la concentration de boues activées lors de l'étape de dénitrification et d'élimination du carbone est comprise entre 1 et 4 g/l, de préférence entre 1 et 2 g/l.

13. Procédé selon l'une quelconque des revendications précédentes caractérisé en ce que la valeur du seuil S₀ est située dans un intervalle compris entre 30 et 70 mV/EHN, de préférence entre 40 et 60 mV/EHN.

14. Procédé selon l'une quelconque des revendications précédentes caractérisé en ce que la valeur du seuil S₁ est située dans un intervalle compris entre 50 et 80 mV/EHN, de préférence entre 60 et 70 mV/EHN.

15. Procédé selon l'une quelconque des revendications précédentes caractérisé en ce que la valeur du seuil S₂ est située dans un intervalle compris entre 100 et 150 mV/EHN, de préférence entre 110 et 120 mV/EHN.

16. Procédé selon l'une quelconque des revendications précédentes caractérisé en ce que la valeur du seuil S₃ est située dans un intervalle compris entre 0,3 et 2 mg N-NO_{X} / l, et de préférence compris entre 0,5 et 1,5 mg-N-Noₓ / l.

17. Procédé selon l'une quelconque des revendications précédentes caractérisé en ce que la séparation de la boue activée et de l'effluent intermédiaire est effectuée de préférence par décantation lamellaire dans un ouvrage séparé et situé en aval du réacteur dans lequel s'effectue l'étape de dénitrification et d'élimination du carbone.

18. Procédé selon l'une quelconque des revendications précédentes caractérisé en ce que la concentration en azote ammoniacal de l'effluent final est mesurée en continu afin d'être maintenu en permanence en-dessous d'une concentration donnée, cette concentration étant inférieure à 2 mg N-NH₄/l de préférence égale ou inférieure à 1 mg N-NH₄/l.

19. Dispositif pour la mise en oeuvre du procédé selon l'une quelconque des revendications précédentes caractérisé en ce qu'il comprend :
- un réacteur (2) à culture libre évoluant en milieu anoxique en présence d'azote nitrique ou nitreux, ce réacteur comportant des moyens (3) d'agitation mécanique fonctionnant d'une façon continue, des moyens d'apport de l'air d'appoint (5) asservis à la mesure du potentiel d'oxydo-réduction et une sonde (4) de mesure du potentiel d'oxydo-réduction du milieu anoxique ;
- un clarificateur (6) , séparé du réacteur anoxique (2) , effectuant la séparation de la boue anoxique de l'effluent dénitrifié ;
- un circuit (7) de recyclage de la boue anoxique séparée dans ledit réacteur à culture libre (2) ;
- un moyen de mesure en continu de la concentration de nitrates dans l'effluent intermédiaire (12), couplé au recyclage (11) de la liqueur nitrifiée de manière à diminuer automatiquement le taux dudit recyclage lorsqu'est atteint le seuil S₃ de concentration en nitrates , afin de corriger les éventuelles défaillances ou anomalies du système de régulation de la recirculation par la mesure du potentiel d'oxydo-réduction, conduisant vers une dénitrification incomplète, ledit moyen de mesure étant également couplé à la sonde (4) de mesure du potentiel d'oxydo-réduction du milieu anoxique;
- un réacteur de nitrification à biomasse fixée à support fixe (9) ou mobile (9') recevant l'effluent intermédiaire provenant du clarificateur (6), et
- un circuit (11) de recirculation d'une partie de l'effluent final dans le réacteur à culture libre contenant la boue anoxique, le débit de recirculation étant asservi à la mesure du potentiel d'oxydo-réduction (4) de la boue anoxique dans le réacteur (2) anoxique.

20. Dispositif selon la revendication 19 caractérisé en ce que le réacteur de nitrification (9,9') comporte en outre des moyens assurant une mesure en continu de la concentration en azote ammoniacal à la sortie de ce réacteur.

21. Dispositif selon l'une des revendications 19 et 20 caractérisé en ce que le réacteur de nitrification (9) de l'effluent intermédiaire est un biofiltre nitrifiant à courant ascendant, à très faible temps de séjour hydraulique.

22. Dispositif selon l'une des revendications 19 et 20 caractérisé en ce que le réacteur de nitrification (9') de l'effluent intermédiaire est un réacteur à culture fixée, du type lit mobile ou fluidisé.

23. Dispositif selon l'une quelconque des revendications 19 à 22 caractérisé en ce qu'il comporte en outre un séparateur lamellaire (6), placé en aval du réacteur anoxique (2) pour assurer la séparation de la boue anoxique de l'effluent dénitrifié.

24. Dispositif selon l'une quelconque des revendications 19 à 23 caractérisé en ce qu'il comporte en outre des moyens (15) de mesure en continu de la concentration en azote ammoniacal de l'effluent final (10), ces moyens étant disposés à la sortie du réacteur de nitrification (9, 9').

## Patentansprüche

1. Biologisches Verfahren zur Abwasserreinigung, um einen Abfluss mit niedrigem Gehalt an Kohlenstoff und sauerstoffhaltigen Stickstoffverbindungen zu erzeugen, welches eine mit einer Klärung verbundene Denitrifikationsstufe durch Behandlung mit Belebtschlamm, gefolgt von einer Nitrifikationsstufe, und eine teilweise Rückleitung des stickstoffhaltigen Abflusses hinter die Stufe der Belebtschlammbehandlung umfasst, **dadurch gekennzeichnet, dass** die Kohlenstoffentfernung in der Stufe der Belebtschlammbehandlung in demselben Bioreaktor realisiert wird, wobei diese Entfernung entsprechend den Charakteristika Durchsatz-Verunreinigungen des zu behandelnden Wassers in Gegenwart von
- in den stickstoffverbindungen gebundenem Sauerstoff, wobei die Stufe der Kohlenstoffentfernung eine gleichzeitige Denitrifikation enthält,
- Sauerstoff, der durch kontinuierliche oder diskontinuierliche kontrollierte Belüftung mit direkter Oxidation des Kohlenstoffs eingetragen wird, und
- gleichzeitig in Stickstoffverbindungen gebundenem Sauerstoff und von Sauerstoff, der durch die kontinuierliche oder diskontinuierliche kontrollierte Oxidation, damit mit gleichzeitiger Denitrifikation und Oxidation des Kohlenstoffs, eingetragen wird, vonstatten geht, **dass**
die Führung des Verfahrens durch kontinuierliche Messung des Redox-Potentials des anoxischen Milieus sichergestellt wird, wobei diese Messung mit
- einer Messung der Konzentration der Nitrate des Zwischen-Abflusses,
- einer Einrichtung zur Regelung der Mittel, welche dem anoxischen Schlamm den ergänzender Sauerstoff zuführen, und
- einer Durchsatzregelung der Rückleitung der nitrifizierten Flüssigkeit verbunden ist, **und dass**
- diese Konzentrationsmessung der Nitrate mit der Rückleitung der nitrifizierten Flüssigkeit gekoppelt ist.

2. Verfahren nach Anspruch 1, **dadurch gekennzeichnet, dass** die Nitrifikationsstufe mit einer auf einem unbeweglichen oder mobilen Träger immobilisierten Kultur durchgeführt wird.

3. verfahren nach Anspruch 1 oder 2, **dadurch gekennzeichnet, dass** die gesamte hydraulische Verweilzeit des rohen Abflusses in der Stufe der Belebtschlammbehandlung und des Zwischen-Abflusses in der Nitrifikationsstufe ohne Einbeziehung der Rückleitung 1,5 bis 5 Stunden und vorzugsweise 2 bis 3 Stunden beträgt.

4. Verfahren nach einem der Ansprüche 1 bis 3, **dadurch gekennzeichnet, dass** die der Stufe der Belebtschlammbehandlung zugeführte organische Belastung gleich oder größer als
3 kg CSB/kg veratembarer Stoff und Tag und vorzugsweise gleich oder größer als 4 kg CSB/kg veratembarer Stoff und Tag ist.

5. Verfahren nach einem der vorhergehenden Ansprüche, **dadurch gekennzeichnet, dass** der Gesamtdurchsatz des das System durchströmenden Abflusses im wesentlichen konstant ist.

6. Verfahren nach einem der vorhergehenden Ansprüche, **dadurch gekennzeichnet, dass** das Abwasser kommunalen Ursprungs vor der Behandlung in der Belebtschlammstufe nicht absetzen gelassen wird.

7. Verfahren nach einem der Ansprüche 1 bis 5, **dadurch gekennzeichnet, dass** das Abwasser industriellen. Ursprungs vor der Behandlung in der Belebtschlammstufe auf geeignete Weise vorbehandelt wird.

8. Verfahren nach einem der vorhergehenden Ansprüche, **dadurch gekennzeichnet, dass** der Rückleitungsdurchsatz des nitrifizierten Abflusses zur Stufe der Belebtschlammbehandlung nach der kontinuierlichen Messung des Redox-Potentials in dieser Stufe für Werte dieses Potentials zwischen den Grenzwerten S₁ und S₂ geregelt wird.

9. Verfahren nach einem der vorhergehenden Ansprüche, **dadurch gekennzeichnet, dass,** wenn der Rückleitungsdurchsatz den Höchstwert erreicht hat, jedesmal, wenn der Grenzwert S₀ des Redox-Potentials erreicht ist, in der Stufe der Belebtschlammbehandlung ein insbesondere durch kontinuierliche oder diskontinuierliche Belüftung durchgeführter Sauerstoffeintrag ausgelöst wird.

10. Verfahren nach einem der vorhergehenden Ansprüche, **dadurch gekennzeichnet, dass** der Rückleitungsdurchatz und die kontinuierliche oder diskontinuierliche Oxidation in der Stufe der Belebtschlammbehandlung nach der gleichzeitigen und kontinuierlichen Messung des Redox-Potentials in dieser Stufe und der Nitratkonzentration des Abflusses aus derselben Stufe geregelt werden, wobei die Nitratkonzentration unterhalb eines Grenzwertes S₃ gehalten wird.

11. Verfahren nach einem der vorhergehenden Ansprüche, **dadurch gekennzeichnet, dass** der zur Stufe der Denitrifikation und Kohlenstoffentfernung zurückgeleitete Anteil der nitrifizierten Flüssigkeit 50 bis 400 % beträgt.

12. Verfahren, nach einem der vorhergehenden Ansprüche, **dadurch gekennzeichnet, dass** die Belebtschlamm-Konzentration in der Stufe der Denitrifikation und Kohlenstoffentfernung 1 bis 4 g/l und vorzugsweise 1 bis 2 g/l beträgt.

13. Verfahren nach einem der vorhergehenden Ansprüche, **dadurch gekennzeichnet, dass** sich der Grenzwert S₀ in einem Intervall von 30 bis 70 mV/Normalwasserstoffelektrode und vorzugsweise von 40 bis 60 mV/Normalwasserstoffelektrode befindet.

14. Verfahren nach einem der vorhergehenden Ansprüche, **dadurch gekennzeichnet, dass** sich der Grenzwert S₁ in einem Intervall von 50 bis 80 mV/Normalwasserstoffelektrode und vorzugsweise von 60 bis 70 mV/Normalwasserstoffelektrode befindet.

15. Verfahren nach einem der vorhergehenden Ansprüche, **dadurch gekennzeichnet, dass** sich der Grenzwert S₂ in einem Intervall von 100 bis 150 mV/Normalwasserstoffelektrode und vorzugsweise von 110 bis 120 mV/Normalwasserstoffelektrode befindet.

16. Verfahren nach einem der vorhergehenden Ansprüche, **dadurch gekennzeichnet, dass** sich der Grenzwert S₃ in einem Intervall von 0,3 bis 2 mg N-NOₓ/l und vorzugsweise von 0,5 bis 1,5 mg N-NO_{X}/l befindet.

17. Verfahren nach einem der vorhergehenden Ansprüche, **dadurch gekennzeichnet, dass** die Trennung von Belebtschlamm und Zwischen-Abfluss vorzugsweise durch Lamellenabscheiden in einer getrennten Anlage durchgeführt wird, die sich nach dem Reaktor befindet, in welchem die Stufe der Denitrifikation und Kohlenstoffentfernung stattfindet.

18. Verfahren nach einem der vorhergehenden Ansprüche, **dadurch gekennzeichnet, dass** die Konzentration des ammoniakalischen Stickstoffs im fertigen Abfluss kontinuierlich gemessen wird, um sie ständig unterhalb einer vorgegebenen Konzentration zu halten, die weniger als 2 mg N-NH₄/l und vorzugsweise gleich oder weniger als 1 mg N-NH₄/l beträgt.

19. Vorrichtung zur Durchführung des Verfahrens nach einem der vorhergehenden Ansprüche, **dadurch gekennzeichnet, dass** sie
- einen Reaktor (2) mit einer freien Kultur, welche im anoxischen Milieu in Gegenwart von Nitrat- oder Nitritstickstoff wächst, wobei der Reaktor kontinuierlich arbeitende mechanische Rührmittel (3), Mittel (5) für den Eintrag von Ergänzuzgsluft, die nach der Messung des Redox-Potentials geregelt werden, und eine Meßsonde (4) für das Redox-Potential des anoxischen Milieus enthält,
- einen vom anoxischen Reaktor (2) getrennten Klärer (6), in welchem die Trennung von anoxischem Schlamm und denitrifiziertem Abfluss durchgeführt wird,
- einen Kreislauf (7) für den abgetrennten anoxischen Schlamm in den Reaktor (2) mit freier Kultur,
- ein Mittel (12) zur kontinuierlichen Messung der Nitratkonzentration im Zwischen-Abfluss, das mit der Rückleitung (11) der nitrifizierten Flüssigkeit derart gekoppelt ist, dass der Rückleitungsanteil automatisch verringert wird, wenn der Grenzwert S₃ der Nitratkonzentration erreicht ist, um mögliche Störungen oder Anomalien des Regelungssystems der Rückleitung, die zu einer unvollständigen Denitrifikation führen würden, durch Messung des Redox-Potentials zu korrigieren, wobei dieses Messmittel auch mit der Sonde (4) zur Messung des Redoxpotentials des anoxischen Milieus gekoppelt ist,
- einen Nitrifikationsreaktor für an einem unbeweglichen (9) oder mobilen Träger (9') immobilisierte Biomasse, der den aus dem Klärer (5) kommenden Zwischen-Abfluss aufnimmt, und
- einen Kreislauf (11) für einen Teil des fertigen Abflusses in den den anoxischen Schlamm enthaltenden Reaktor mit freier Kultur, wobei der Rückleitungsdurchsatz nach Messung des Redox-Potentials (4) des anoxischen Schlamms im anoxischen Reaktor (2) geregelt wird,
umfasst.

20. Vorrichtung nach Anspruch 19, **dadurch gekennzeichnet, dass** der Nitrifikationsreaktor (9, 9') außerdem Mittel enthält, welche nach dessen Ausgang eine kontinuierliche Konzentrationsmessung des ammoniakalischen Stickstoffs sicherstellen.

21. Vorrichtung nach Anspruch 19 oder 20, **dadurch gekennzeichnet, dass** der Nitrifikationsreaktor (9) für den Zwischen-Abfluss ein nitrifizierender Biofilter mit aufsteigender Strömung und mit sehr kurzer hydraulischer Verweilzeit ist.

22. Vorrichtung nach Anspruch 19 oder 20, **dadurch gekennzeichnet, dass** der Nitrifikationsreaktor (9') für den Zwischen-Abfluss ein Reaktor mit immobilisierter Kultur vom Typ Bewegt- oder Fließbett ist.

23. Vorrichtung nach einem der Ansprüche 19 bis 22, **dadurch gekennzeichnet, dass** sie außerdem einen nach dem anoxischen Reaktor (2) angeordneten Lamellenabscheider (6) enthält, um die Trennung des anoxischen Schlamms vom denitrifizierten Abfluss sicherzustellen.

24. Vorrichtung nach einem der Ansprüche 19 bis 23, **dadurch gekennzeichnet, dass** sie außerdem Mittel (15) zur kontinuierlichen Messung der Konzentration an ammoniakalischem Stickstoff des fertigen Abflusses (10) enthält, die nach dem Ausgang des Nitrifikationsreaktors (9, 9') angeordnet sind.

## Claims

1. Process for the biological purification of waste water for producing an effluent with a low content of carbon and oxygen compounds of nitrogen having a denitrification stage, by the treatment of activated sludge, associated with a clarification, followed by a nitrification stage and involving a partial recirculation of the nitrated effluent upstream of the treatment stage by activated sludge, said process being characterized in that the elimination of the carbon takes place, during the stage of treatment by activated sludge, in the same biological reactor, said elimination taking place as a function of the flow rate-pollution characteristics of the water to be treated, in the presence:
- of constituent oxygen of the nitrated compounds, the stage of eliminating the carbon involving a simultaneous denitrification,
- of oxygen supplied by a controlled aeration, of a continuous or discontinuous nature and thus with direct oxidation of the carbon,
- simultaneously constituent oxygen of the nitrated compounds and oxygen supplied by the controlled oxidation, of a continuous or discontinuous nature, and consequently with simultaneous denitrification and oxidation of the carbon, in that
the performance of the process being ensured by the continuous measurement of the redox potential of the anoxic medium, said measure being coupled:
- with a measurement of the nitrate concentration of the intermediate effluent,
- with a device for making the top-up air supply means dependent on the anoxic sludge, and
- a control of the nitrified liquid recirculation flow and in that said measurement of the nitrate concentration is coupled with the recirculation of the nitrified liquid.

2. Process according to claim 1, characterized in that the nitrification stage is performed on a culture immobilized on a fixed or moving support.

3. Process according to one of the claims 1 or 2, characterized in that the total hydraulic residence time of the crude effluent during the activated sludge treatment stage and the intermediate effluent during the nitrification stage and without including the recirculation, is between 1.5 and 5 hours, preferably between 2 and 3 hours.

4. Process according to any one of the claims 1 to 3, characterized in that the organic charge applied to the activated sludge treatment stage is equal to or in excess of 3 and preferably equal to or excess of 4 kg DCO/kg. day.

5. Process according to any one of the preceding claims, characterized in that the total flow of effluent traversing the system is substantially constant.

6. Process according to any one of the preceding claims, characterized in that urban waste water undergoes no prior settling during treatment in the activated sludge treatment stage.

7. Process according to any one of the claims 1 to 5, characterized in that industrial waste water undergoes an appropriate pretreatment, upstream of the treatment thereof in the activated sludge treatment stage.

8. Process according to any one of the preceding claims, characterized in that the recirculation flow of the nitrified effluent to the activated sludge treatment stage is dependent on the continuous measurement of the redox potential in said stage, for values of said potential between thresholds S₁ and S₂.

9. Process according to any one of the preceding claims, characterized in that when the recirculation flow has reached its maximum value, oxygen is supplied to the activated sludge treatment stage, particularly by continuous or discontinuous aeration whenever a redox potential threshold S₀ is reached.

10. Process according to any one of the preceding claims, characterized in that the recirculation flow and the continuous or discontinuous oxygenation during the activated sludge treatment stage is dependent on the simultaneous, continuous measurement of the redox potential in this stage and the nitrate concentration of the effluent of said same stage, the nitrate concentration being maintained below a threshold S₃.

11. Process according to any one of the preceding claims, characterized in that the nitrified liquid recirculation rate to the denitrification and carbon elimination stage is between 50 and 400%.

12. Process according to any one of the preceding claims, characterized in that the activated sludge concentration during the denitrification and carbon elimination stage is between 1 and 4 and preferably between 1 and 2 g/l.

13. Process according to any one of the preceding claims, characterized in that the value of the threshold S₀ is in a range between 30 and 70 and preferably between 40 and 60 mV/EHN.

14. Process according to any one of the preceding claims, characterized in that the value of the threshold S₁ is in a range between 50 and 80 and preferably between 60 and 70 mV/EHN.

15. Process according to any one of the preceding claims, characterized in that the value of the threshold S₂ is in a range between 100 and 150 and preferably between 110 and 120 mV/EHN.

16. Process according to any one of the preceding claims, characterized in that the value of the threshold S₃ is in a range between 0.3 and 2 and preferably between 0.5 and 1.5 mg N-Nox/1.

17. Process according to any one of the preceding claims, characterized in that the separation of the activated sludge and the intermediate effluent preferably takes place by lamellar settling in a separate structure positioned downstream of the reactor, in which the denitrification and carbon elimination stage takes place.

18. Process according to any one of the preceding claims, characterized in that the ammoniacal nitrogen concentration of the final effluent is measured continuously in order to be kept permanently below a given concentration, said concentration being lower than 2 and preferably equal to or lower than 1 mg N-NH₄/1.

19. Apparatus for performing the process according to any one of the preceding claims, characterized in that it comprises:
- a free culture reactor (2) evolving in an anoxic medium in the presence of nitric or nitrous nitrogen, said reactor having mechanical stirring means (3) operating in a continuous manner, top-up air supply means (5) dependent on the measurement of the redox potential and a probe (4) for measuring the redox potential of the anoxic medium,
- a clarifier (6), separate from the anoxic reactor (2), which separates the anoxic sludge from the denitrified effluent,
- a circuit (7) for recycling the anoxic sludge separated in the free culture reactor (2),
- a means for continuously measuring the nitrate concentration in the intermediate effluent (12), coupled to the recycling (11) of the nitrified liquid so as to reduce the level of said recycling when the nitrate concentration threshold S₃ is reached in order to correct any anomalies or failings of the system for regulating the recirculation by measurement of the redox potential, leading to an incomplete denitrification, said measuring means also being coupled to the anoxic medium redox potential measuring probe (4),
- a nitrification reactor with a biomass fixed to the fixed support (9) or mobile support (9') receiving the intermediate effluent from the clarifier (6) and
- a circuit (11) for recirculating part of the final effluent in the free culture reactor containing the anoxic sludge, the recirculation flow being dependent on the measurement of the redox potential (4) of the anoxic sludge in the anoxic reactor (2).

20. Apparatus according to claim 19, characterized in that the nitrification reactor (9, 9') also has means ensuring a continuous measurement of the ammoniacal nitrogen concentration at the outlet of said reactor.

21. Apparatus according to one of the claims 19 and 20, characterized in that the intermediate effluent nitrification reactor (9) is a rising flow nitrifying biofilter with a very short hydraulic residence time.

22. Apparatus according to one of the claims 19 and 20, characterized in that the intermediate effluent nitrification reactor (9') is a fixed culture reactor of the fluid or fluidized bed type.

23. Apparatus according to any one of the claims 19 to 22, characterized in that it also has a lamellar separator (6), positioned downstream of the anoxic reactor (2) for separating the anoxic sludge from the denitrified effluent.

24. Apparatus according to any one of the claims 19 to 23, characterized in that it also has means (15) for continuously measuring the ammoniacal nitrogen concentration of the final effluent (10), said means being located at the outlet of the nitrification reactor (9, 9').
